# EUROPEAN PATENT SPECIFICATION

(11) **EP 3 185 510 B1**
(45) Date of publication and mention of the grant of the patent: **07.11.2018**
(21) Application number: 16205573.5
(22) Date of filing: 20.12.2016
(51) Int. Cl.: H04L 29/06

(54) **METHOD FOR DATA PACKET INSPECTION, RELATED DEVICE AND COMPUTER-PROGRAM PRODUCT**
VERFAHREN ZUR DATENPAKETINSPEKTION, ZUGEHÖRIGE VORRICHTUNG UND COMPUTERPROGRAMMPRODUKT
PROCÉDÉ D'INSPECTION DE PAQUETS DE DONNÉES, DISPOSITIF ASSOCIÉ ET PRODUIT-PROGRAMME D'ORDINATEUR

(30) Priority: 21.12.2015 IT UB20159498
(43) Date of publication of application: 28.06.2017
(73) Proprietor: ENNOVA S.r.l., 10128 Torino (TO) (IT)
(72) Inventor: POMI, Paolo, 10128 Torino (IT); RISSO, Fulvio, 10128 Torino (IT)
(74) Representative: Meindl, Tassilo

(56) References cited:
- US-A1- 2007 199 064
- US-A1- 2007 271 220
- US-A1- 2008 320 580
- US-B1- 9 397 978
- "McAfee Web Gateway 7.2 Product Guide Revision A. Data Loss Prevention Chapter.", , 25 April 2012 (2012-04-25), pages 235-246, XP055175239, Retrieved from the Internet: URL:http://www.mcafee.com/ [retrieved on 2015-03-10]

## Description

### Technical field

The embodiments of the present description regard techniques for packet inspection, for example within a router.

### Background

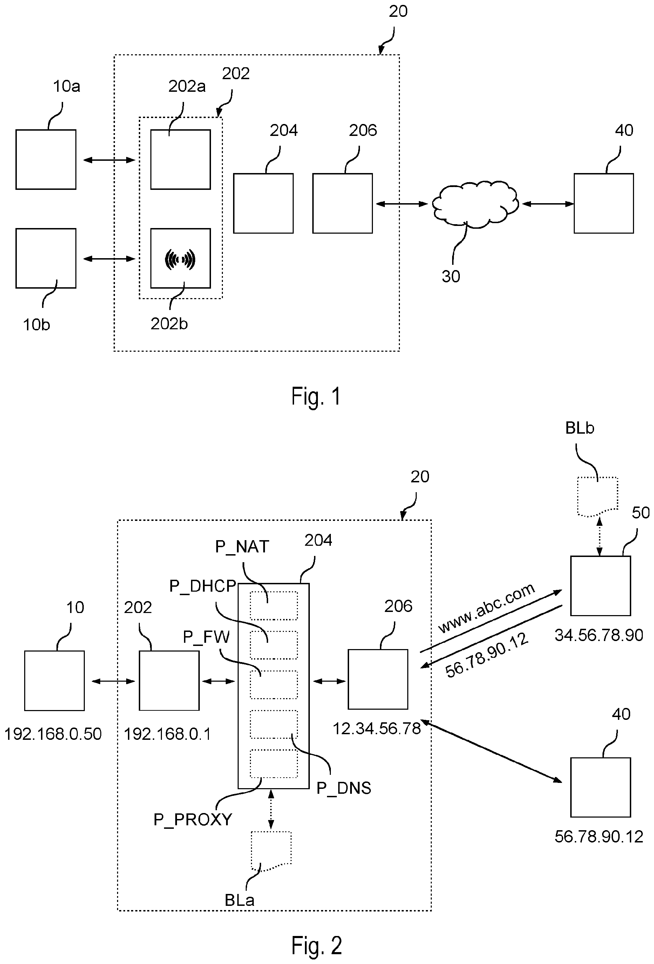

Figure 1 shows a typical communication system.

In the example considered, the system comprises a router 20 that enables access to a WAN (Wide-Area Network) 30, such as the Internet.

For instance, the router 20 typically comprises for this purpose a communication interface 206 for connection to the network 30. The communication interface 206 may be, for example:
- a DSL (Digital Subscriber Line) modem;
- a mobile communication interface, such as a GSM (Global System for Mobile Communications) transceiver, a CDMA (Code Division Multiple Access) transceiver, a W-CDMA (Wideband Code Division Multiple Access) transceiver, a UMTS (Universal Mobile Telecommunications System) transceiver, an HSPA (High-Speed Packet Access) transceiver, and/or an LTE (Long-Term Evolution) transceiver;
- an Ethernet interface;
- an optical-fibre interface; and/or
- a WiFi (Wireless Fidelity) communication interface, for example according to one of the versions of the IEEE 802.11 standard.

Typically, the router 20 moreover comprises one or more further communication interfaces 202 for connection to a LAN (Local Area Network). For example, in Figure 1 two interfaces 202 are shown, such as:
- an Ethernet interface 202a, which enables connection of a first computer 10a, for example a fixed PC, to the router 20 through a wired network, typically made with RJ45 cables and possible hubs and/or switches; and
- a WiFi interface 202b, preferably configured as access point, which enables exchange of data with a second computer 10b, such as a portable PC or a mobile device, through a wireless network.

Finally, the router 20 typically comprises a processing unit 204 configured for managing exchange of data between the interfaces 202 and 206. For example, the processing unit may be implemented with a microprocessor programmed via software code. One or more of the functions of the processing unit 204 may also be implemented with one or more dedicated hardware components. In this case, the hardware components are preferably programmable, for example through the microprocessor of the processing unit 204. Hence, in this case, the traffic can pass through the microprocessor and/or the hardware components.

Consequently, in the example considered, the computers 10 can exchange data with a remote server 40 through the router 20 and the network 30.

For example, the routers 20 described previously are frequently used as home routers or as SME (Small-to-Medium Enterprise) routers in such a way as to enable access of a LAN to the Internet, for example through a DSL line or optic fibre.

Figure 2 shows in this context a typical exchange of data between a local computer 10 and a remote server 40 based upon the IP (Internet Protocol) protocol.

In particular, according to the IP protocol, each host has associated at least one IP address. For example, according to the version 4 of the IP protocol, each host has an IP address comprising 32 bits, which are usually expressed with four consecutive numbers in the range between 0 and 255. For example, the "external" interface 206 of the router 20, i.e., the interface connected to the WAN, may have the address 12.34.56.78 and the "internal" interface 202 of the router 20, i.e., the interface connected to the LAN, may have the address 192.168.0.1. Likewise, the remote server 40 could have the address 56.78.90.12, and the local computer 10 typically has an IP address that is in the same IP range as the IP address of the LAN interface 202, for example 192.168.0.50.

Specifically, in order to send data to the host 40, the host 10 sends at least one data packet comprising a header IP_H and, as payload, the respective data IP_D to the router 20, where the header IP_H contains at least the address of the sender, i.e., the IP address of the host 10, and the address of the target, i.e., the IP address of the host 40.

The router 20 receives the packet via the interface 202 and forwards the packet through the interface 206 to the WAN 30, which transmits the packet to the host 40. In the case where the LAN uses private IP addresses (for example, in the subsegment 192.168.X.X) the router 20 can also replace the source address of the host 10 with the IP address of the interface 206. For instance, in this case, the processor 204 typically executes an application or process P_NAT, which in turn executes a so-called NAT (Network-Address Translation), in such a way as to forward the response data packets correctly to the private IP address of the host 10.

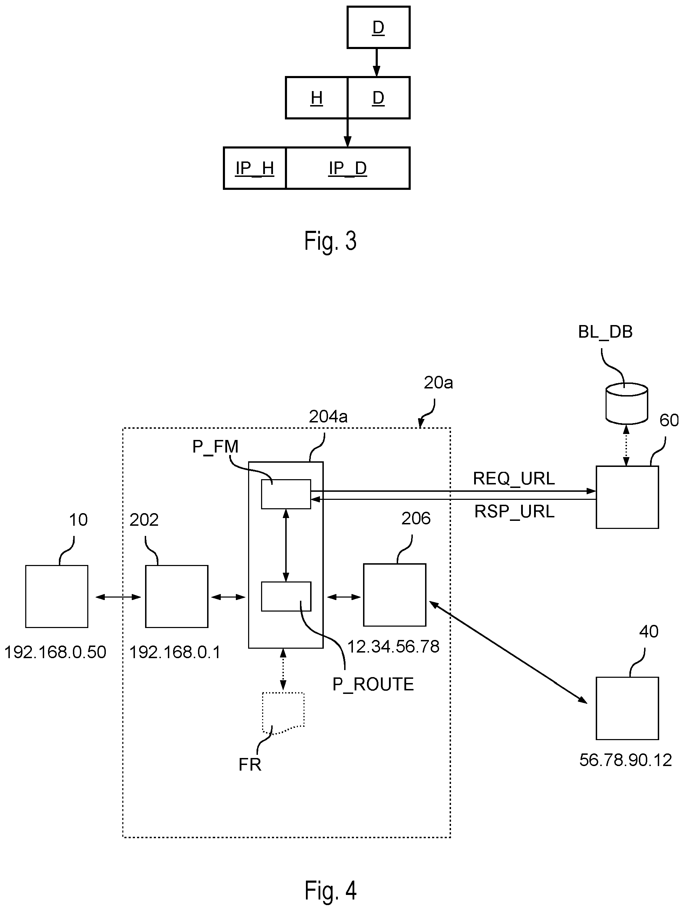

In general, as represented in Figure 3, the data IP_D of an IP packet may not comprise directly the application data D, as, for example, required according to the protocols HTTP (HyperText Transfer Protocol) or FTP (File Transfer Protocol), but the application data D can be encapsulated in a packet of the transport layer, such as a UDP (User Datagram Protocol) packet or a TCP (Transmission Control Protocol) packet, which in turn comprises a header H and, as payload, the data D; i.e., the IP data IP_D may comprise an additional transport-layer header H and the application data D.

For example, the UDP or TCP headers enable specification of an additional port number for communication. The differences between UDP and TCP protocols are well known to the persons skilled in the sector, thus rendering a more detailed description herein superfluous. Basically, the TCP protocol is more complex in order to enable a more reliable transmission of the data using, for example, a flow control, a numbering of the sequence and a check code (checksum) for detecting transmission errors.

Another important element of the IP protocol is the DNS (Domain-Name System). Basically, as explained previously, the IP protocol is based upon a communication between an IP source address and an IP destination address, which may even change over time. Thus, to enable a simpler identification of the various hosts in the network, a hostname, usually in the form of an FQDN (Fully Qualified Domain Name) may be associated to each host. In this case, a DNS (Domain-Name Server) server 50 translates these hostnames into the numeric IP addresses required for the IP communication.

Specifically, as represented in Figures 2, a DNS server 50 is also connected to the network 30 and has associated a given IP address, for example, "56.78.90.12". In this case, the host 10 has stored in some way the IP address of the DNS server 50. For example, as is well known to a person skilled in the branch, the IP address of the DNS server can be stored together with the other information on configuration of the IP protocol or this information may be obtained from a server of the DHCP (Dynamic Host Configuration Protocol) protocol, which can be executed also within the router 20. For example, as shown in Figure 2, the processor 204 can execute an application or process P_DHCP that assigns IP addresses and the respective information on configurations to the computers 10 that are connected to the LAN, i.e., to the interface 202.

Consequently, when the host 10 attempts to connect up to a given hostname, such as *"www.abc.com",* it sends a DNS request to the DNS server 50 that contains the requested hostname, and, in the case where the hostname exists, the DNS server 50 returns the IP address associated to the hostname, for example, the IP address of the host 40. At this point the host 10 knows the IP address of the host 40 and can generate the corresponding IP header IP_H and can send the IP packet through the router 20 to the network 30.

In the last few years there has been felt the need to control access to the WAN, for example for blocking given sites for reasons of security or as parental control, for example for blocking access to undesirable sites that contain contents not suitable for children.

Frequently, this access control is carried out via a purposely provided software installed on the computer 10. However, also solutions have been proposed in which access control is carried out through the router 20.

For example, in various solutions, there has been proposed management of a black-list BLa within the router 20.

For instance, as shown in Figure 2, typically the processing unit 204 executes an application or process P_FW that implements a firewall for blocking undesirable traffic from the WAN to the LAN and/or vice versa. In particular, this firewall P_FW is typically configured for analysing the IP packets and verifies whether these IP packets satisfy certain rules, for example with reference to the source address, to the destination address and/or to the ports used. In this case, the list BLa may contain the IP addresses of the hosts 40 and possibly the respective ports that are blocked. In this case, the router 20 can simply reject the packets that contain the aforesaid IP addresses as destination.

However, as explained previously, the IP addresses of the remote hosts 40 can change and consequently this solution is not very secure.

For this reason, blocking may also be carried out at the DNS level. For example, the router 20 may manage inside it an application or process P_DNS that implements a DNS server. In this case, the router 20 is typically configured in such a way that all the DNS requests of the various hosts 10 are processed by the above server P_DNS. For example, typically, the hosts 10 have configured the IP protocol of the interface 202 as DNS server. In this case, the list BLa may contain the list of the hostnames that are to be blocked, and the DNS server of the router 20 can forward the DNS requests to the remote DNS server 50 only if the request does not contain a blocked hostname.

Instead of implementing the DNS filter within the router 20, a similar solution has been proposed, whereby the DNS server 50 manages a similar black-list BLb. For example, a solution of this kind has been proposed by the OpenDNS service (http://www.opendns.com).

This solution hence presents the advantage that specific hostnames (or entire hostnames) can be blocked and the respective IP address can change without problems of security, also reducing the problem of so-called virtual hosts, where a plurality of virtual hosts with different hostnames are managed through a single IP address. In fact, in the solutions described with reference to blocking of IP addresses through the firewall, all the virtual hosts associated to a given IP address would be blocked.

This solution presents, however, the disadvantage that all the contents of a host are blocked without any possibility of distinguishing specific URLs (Uniform Resource Locators).

For this reason, the most flexible solution is the use of a so-called proxy server within the router 20. For example, the router 20 can manage inside it an application or process PPROXY that implements an HTTP and/or FTP proxy server. In this case, the server P_PROXY comprises an HTTP and/or FTP server that receives requests from the internal hosts 10 and an HTTP and/or FTP client that sends corresponding requests to the remote hosts. Consequently, the server P_PROXY is able to block any access on the basis of IP addresses, hostnames, or also specific URLs. For example, a possible solution of this kind is offered by DansGuardian (http://dansguardian.org/). Frequently, the corresponding black-lists are grouped in different categories and can be updated via one or more remote servers.

However, the use of a proxy server requires a computing capacity that is frequently not provided in a home or SME router. Consequently, typical routers of this category are today still only able to control access to the network 30 through one or more lists that contain the blocked IP addresses and/or hostnames.

The present description relates thus to a method for data packet inspection. In this respect, documents *"*McAfee Web Gateway 7.2 Product Guide Revision A. Data Loss Prevention Chapter", 25 April 2012, US 2008/320580 A1, US 2007/271220 A1, US 2007/199064 A1 and US 9 397 978 B1 may also be of interest for the present invention.

### Summary

According to one or more embodiments, one or more of the above objects are achieved through a method presenting the distinctive elements set forth specifically in the ensuing claims. The embodiments moreover regard a corresponding device, as likewise a corresponding computer-program product, which can be loaded into the memory of at least one computer and comprises portions of software code for implementing the steps of the method when the product is run on a computer. As used herein, a reference to such a computer-program product is understood as being equivalent to reference to a computer-readable means containing instructions for controlling a processing system in order to co-ordinate execution of the method. Reference to "at least one computer" is evidently intended to highlight the possibility of the present invention being implemented in a distributed and/or modular way.

The claims form an integral part of the technical teaching of the disclosure provided herein.

As mentioned previously, the present description provides solutions for inspecting data packets by means of a device comprising a first communication interface, which can be connected to a first network, such as a LAN, and a second communication interface (that could also correspond physically to the first communication interface), which can be connected to a second network, such as a WAN.

In various embodiments, the device receives, through the first communication interface, one or more data packets that may comprise a request for access of a first host connected to the first network to a resource managed by a second host connected to the second network. The device analyses the data packets received to detect the access request. For example, to detect an HTTP request, the device may determine whether the data packet starts with a method of the HTTP protocol, for example *"GET", "POST",* or *"PUT".*

In various embodiments, the device analyses the access request in order to detect the respective requested resource, determines whether the requested resource is blocked or allowed, and identifies the status of the response to said access request as blocked or allowed. For example, in various embodiments, the device verifies for this purpose whether the requested resource is stored in one or more lists stored within the device. The device can also send a verification request to a remote policy server and receive a respective verification response from the policy server.

In various embodiments, the device may also detect identification of the first host and/or of the user that uses the first host, and determine whether this host and/or user has access to the requested resource. The device may also detect the date and/or time and determine whether the requested resource is blocked on the basis of the date and/or time detected. The device may also monitor the number of requests for access to a given resource to determine whether the requested resource is blocked.

In various embodiments, the device sends the request to the second communication interface. Consequently, the device receives, through the second communication interface, data packets that may comprise a response of the second host to the access request of the first host.

In various embodiments, the device analyses the data packets received through the second communication interface to detect the above response. For example, to detect an HTTP response, the device can determine whether the data packet starts with a status line of the HTTP protocol, for example *"HTTP", "HTTP*/*1.0",* or *"HTTPI*/*1*/*1".*

In various embodiments, the device then verifies the status of the response in order to determine whether the response is blocked or allowed. For instance, the device may manage for this purpose a session table comprising the blocked responses and/or the allowed responses. Typically, each blocked response and/or allowed response has associated information that enables identification of at least the respective first and second hosts.

In various embodiments, in the case where the response is blocked, the device inhibits forwarding of at least part of the response. For example, for this purpose the device may reject the response or modify it, for instance, in such a way as to re-address the first host to an error page.

In various embodiments, in the case where the response is allowed, the device allows the response to pass; for example, it forwards the data packets received to the first communication interface.

Consequently, in various embodiments, the device does not block the request, but rather the data in response to a request for access to a blocked resource. Hence, the device can verify whether the resource is blocked, while the second host can already supply data in response to the request, thus reducing the communication latency. To prevent these data from getting lost, the device can initially identify the status of the response to an access request as unknown. When a response is then detected and in the case where the corresponding status is still unknown, the device can store at least part of the corresponding data in a memory.

### Brief description of the figures

The embodiments of the present description will now be described with reference to the annexed drawings, which are provided purely by way of nonlimiting example, and in which:
- Figures 1 to 3 have already been described previously;
- Figure 4 shows an embodiment of a communication system comprising a packet-inspection device according to the present description, in which the packet-inspection device determines through a remote policy server whether a given resource is blocked;
- Figures 5a to 5c show embodiments of exchange of information between the packet-inspection devices and the remote policy server;
- Figures 6 and 7 show embodiments of the packet-inspection devices; and
- Figures 8 and 9 are flow charts that illustrate one embodiment of the operation of the packet-inspection devices.

### Detailed description

In the ensuing description, numerous specific details are provided to enable an in-depth understanding of the embodiments. The embodiments may be implemented without one or more specific details, or with other methods, components, materials, etc. In other cases, well-known operations, materials, or structures are not represented or described in detail so that the aspects of the embodiments will not be obscured.

Reference throughout this description to "an embodiment" or "one embodiment" is meant to indicate that a particular characteristic, distinctive element, or structure described with reference to the embodiment is comprised in at least one embodiment. Hence, phrases such as "in an embodiment", "in one embodiment", or the like that may appear in various points in all the present description do not necessarily all refer to one and the same embodiment. Moreover, the particular characteristics, distinctive elements, or structures may be combined in any adequate way in one or more embodiments.

The references appearing herein are only provided for convenience and do not interpret the scope or the meaning of the embodiments.

In the following Figures 4 to 9, the parts, elements, or components that have already been described with reference to Figures 1 to 3 are designated by the same references as the ones used previously in these figures; the description of the aforesaid elements described previously will not be repeated hereinafter in order not to burden unnecessarily the present detailed description.

As mentioned previously, the present disclosure provides solutions for controlling access of a first network, such as a LAN, to a second network, such as a WAN, for example the Internet.

Figure 4 shows a first embodiment of a router 20a, or in general a packet-inspection device, according to the present description.

Substantially, the router 20a is based upon the same general architecture as that of the router 20 shown in Figures 1 and 2. Consequently, also in the embodiment considered, the router 20a comprises a first communication interface 202 for connection to a first network, such as a LAN, for example an Ethernet or WiFi network, and a second communication interface 206 for connection to a second network, such as the Internet. Consequently, the corresponding description will not be repeated again.

In the embodiment considered, the router 20a further comprises a processing unit 204, such as one or more microprocessors programmed via software code and/or dedicated hardware components, which is configured for managing exchange of data between the interfaces 202 and 206.

Consequently, also in the embodiment considered, a host 10 connected to the interface 202 can exchange data with a remote host 40 connected through the network 30 to the interface 206.

In various embodiments, the exchange of data occurs via the IP protocol (for example IPv4 or IPv6). However, in general, any other network protocol may be used.

Consequently, to forward the packets correctly, the processing unit 204a may comprise a module P_ROUTE, such as a dedicated application and/or dedicated hardware components, which carries out a routing operation. For example, in various embodiments, the module P_ROUTE may comprise:
- a module that carries out an NAT operation; and/or
- a module that controls the routing operation according to certain filtering rules FR.

In general, the processing unit 204a may also comprise one or more of the modules described with reference to Figure 2, such as:
- a module P DHCP that assigns IP addresses and the respective information of configurations to the computers 10 that are connected to the interface 202; and
- a module P_DNS that operates as DNS server.

In various embodiments, the processing unit 204a may also comprise other modules. For instance, in various embodiments, the processing unit 204a may comprise a module that operates as web-server and that enables configuration of the interfaces 202/206 (for example, configuration of the IP addresses assigned to the interfaces 202/206) and/or management of the various modules installed in the processing unit 204a.

Consequently, also the module P_ROUTE could be used for blocking access to the network 30, for example by modifying the filtering rules FR.

In various embodiments, the processing unit 204a comprises a further module P_FM that monitors the operation of the routing module P_ROUTE.

As explained with reference to Figure 3, the application data D, such as requests according to the HTTP or FTP protocols, are encapsulated in a packet of the transport layer, as a UDP or TCP packet, which form the payload IP_D of the IP packet.

Typically, the module P_ROUTE is already configured for analysing the IP packets received via the interface 202 at the transport layer to detect the routing information at the transport layer, such as the source address, the IP destination address, the source port and/or the IP destination port. Consequently, this routing information at the transport layer can already be supplied to the module P_FM. For example, the routing module P_ROUTE may manage a so-called session table, stored in which are the various sessions between the hosts connected to the interface 202 and the hosts connected to the interface 206.

In various embodiments, the module P_FM may analyse further the IP packets received at the application layer.

For example, the module P_FM may implement an inspection of the IP packets, in particular of the payload D, in such a way as to detect HTTP communications. For instance, in various embodiments, the module P_FM may analyse the IP packets to find the HTTP-request message. In particular, these requests contain:
- the requested resource (typically preceded by the field *"GET"* or *"POST"*), for example *"GET*/*default.asp"*; and
- the name of the destination host (typically preceded by the field *"host*"), for example *"host www.abc.com".*

Consequently, by analysing the data of the HTTP requests, the module P_FM can detect new requests for web pages and is able to detect the complete URL made up of the hostname and the requested resource, for example *"www. abc.com*/*default.asp".* In general, the requested resource may already correspond to a URL (for example, *"GET" "http:*//*www.abc.com*/*default.asp"*) and consequently the analysis of the field *"host"* is purely optional. The details of the HTTP request are specified, for example, in the specification RFC 2616, *"Hypertext Transfer Protocol* -- *HTTP*/*1.1*", in particular in Section 5 *"Request".*

In various embodiments, the module P_FM then sends a verification request REQ URL to a remote policy server 60, which contains the URL detected. Preferably, the above requests are sent through the interface 206 to the network 30 using, for example, also in this case the IP protocol.

The server 60 in turn receives the request and verifies whether the URL is red in a database BL_DB. Consequently, once the server 60 has verified whether the URL is included in the database BL_DB, it returns a verification response RSP URL that indicates whether the URL is blocked or not.

Consequently, at the end of the communication, the module P_FM can determine whether the request to the URL should be blocked or not.

In general, the database BL_DB may contain also a number of lists of blocked URLs, i.e., of black-lists, and/or lists of allowed URLs, i.e., of white-lists. For example, the database BL_DB may contain:
- a list of URLs of advertising sites;
- a list of URLs of sites with content that is dangerous from the standpoint of security; and
- a list of URLs that refer to web pages that contain pornographic material.

In various embodiments, the above lists can be activated selectively.

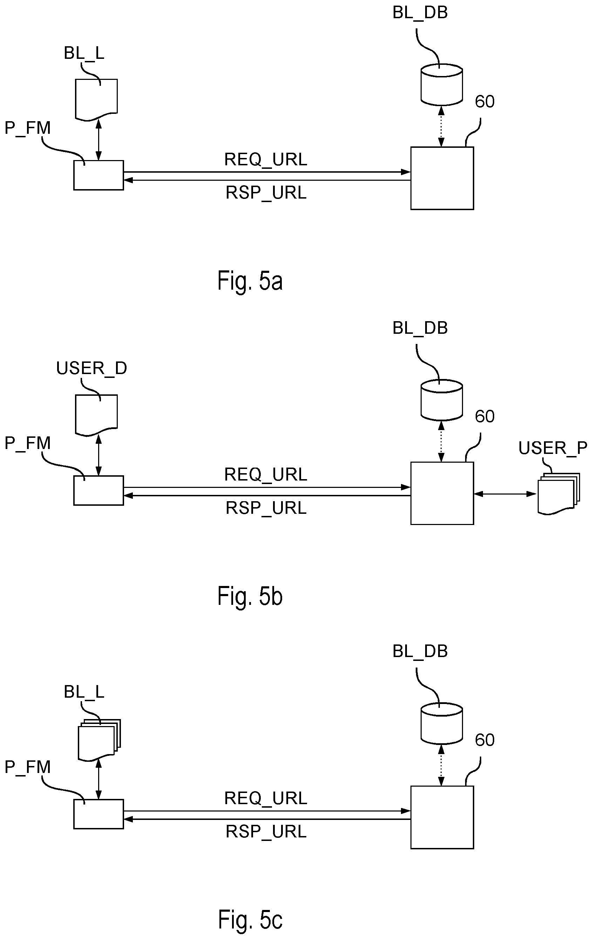

Figure 5a shows a first embodiment. In the embodiment considered, the router 20a, in particular the module P_FM, manages a list that contains the black-lists and/or white-lists that are available in the database BL DB.

In the embodiment considered, the router 20a can hence enable activation or de-activation of the black-lists and/or white-lists within this list BL_L. For instance, as mentioned previously, the router 20a may enable configuration of the various modules, for example through a module that manages a web server. Consequently, the aforesaid configuration page could enable activation or de-activation of the black-lists and/or white-lists of the list BL_L.

For example, in this case, each verification request REQ_URL could comprise not only the URL to be verified, but also the list of the black-lists and/or white-lists that should be used for verification, or else a particular code that, in agreement with the server 60, enables identification of the list of the black-lists and/or white-lists to be used for the verification.

In various embodiments, the server 60 may also verify all the lists, and the verification response RSP_URL could comprise the names of the lists in which the URLs are located. In this case, the decision to block a URL could be taken also by the module P_FM itself, for example using the list BL_L.

Instead, Figure 5b shows an embodiment in which the server 60 enables management of different profiles USER_P that are associated to different users that are identified via respective user data, such as a username and a respective password. In this case, the server 60 could directly enable activation or de-activation of the black-lists and/or white-lists through management of the respective user profile USER_P.

In this case, the configuration page managed inside the router 20a could enable specification of user data USER_D that identify uniquely a specific user profile USER P, such as a username and a password, and each verification request REQ_URL could comprise not only the URL to be verified, but also the user data USER D.

In general, also other data can be used that associate a specific router 20a uniquely to a given profile USER P that contains a given black-list configuration within the server 60. For example, each profile USER_P could comprise a unique code (which is also associated to a respective profile USER_P), and each verification request REQ_URL could comprise the above unique code.

Each verification request REQ URL could also comprise data that identify the host 10 that has sent the request, such as the IP address and/or MAC (Media Access Control) address of the host 10. Consequently, in this case, one profile USER P (or in general one respective configuration of black-lists and/or white-lists) can be provided for each host 10.

Likewise, there may be envisaged an authentication step in which the user of a host 10 must login so as to enable his authentication at the router 20a and/or at the policy server 60. In this case, each verification request REQ URL could comprise data that identify the user who has sent the request, such as for example the username used. Consequently, in this case, there may be envisaged one profile USER_P (or in general one respective configuration of black-lists and/or white-lists) for each user.

In a similar way, as shown in Figure 5c, the router 20a can also manage a plurality of lists of black-lists and/or white-lists, for example one list for each user, IP address, and/or MAC address, which thus makes it possible to enable the black-lists and/or white-lists also according to the identification of the host 10 or of a user that uses a host 10. For example, in this way, the sites potentially dangerous for all the hosts 10 may be blocked, whereas the sites with pornographic material are blocked only for the PCs used by minors.

The embodiments described previously may also be combined. For example, in various embodiments, it could be possible to configure given black-lists and/or white-lists that apply to all the hosts 10. Next, for example in the case where access to a blocked website is requested, the router 20a could show a login page, which hence enables activation of a new configuration of black-lists and/or white-lists.

In various embodiments, the list (see Figure 5a) or lists BL_L (see Figure 5c) may also comprise not only the black-lists and/or white-lists available at the server 60, but may also make it possible to specify one or more URLs that are blocked (the so-called custom black-list) and/or one or more URLs that are not blocked (the so-called custom white-list). In various embodiments, the configuration can be made, also in this case, for all the hosts 10, for specific hosts 10, and/or for specific users.

In various embodiments, the list or lists BL_L may also comprise further configuration data, for example with reference to the time at which given URLs, black-lists and/or white-lists should be enabled or disabled.

In various embodiments, the module P_FM can determine also dynamically if given requests are allowed or blocked. For example, in the case where multiple requests are sent to one and the same URL in a short time interval (which is typical for spreading of a virus), the module P_FM can block the aforesaid URL automatically.

Consequently, with the solutions described previously, the module P_FM is able to determine whether a given URL is to be blocked. Hence, also specific URLs can be blocked. For example, access to video-streaming sites can be allowed, but specific films, i.e. resources, may be blocked.

Consequently, once the module P_FM receives the verification response RSP_URL from the server 60, the module P_FM can analyse the content of the verification response RSP URL in order to determine whether the URL is to be blocked.

For example, to block the URL, the module P_FM could indicate to the routing module P_ROUTE that the HTTP request should not be forwarded to the server 40. For instance, in this case, the module P_ROUTE can simply reject the HTTP request. In various embodiments, the module P_FM can also create an HTTP response, which for example contains a request for re-addressing (typically a response that contains the status code 300) to a given website, such as an error page or a login page. For instance, in various embodiments, this page may be managed by a web-server executed by the module 204a.

This embodiment presents in any case the disadvantage that the HTTP request cannot be forwarded until the module P_FM has detected, through interaction with the server 60, whether the respective URL should be blocked or not.

Consequently, in various embodiments, the routing module P_ROUTE does not block the HTTP request received from the hosts 10, but checks whether the response to this request should be blocked.

Consequently, in the embodiment considered, the module P_ROUTE not only has to analyse just the packets received through the interface 202, but also those received through the interface 206.

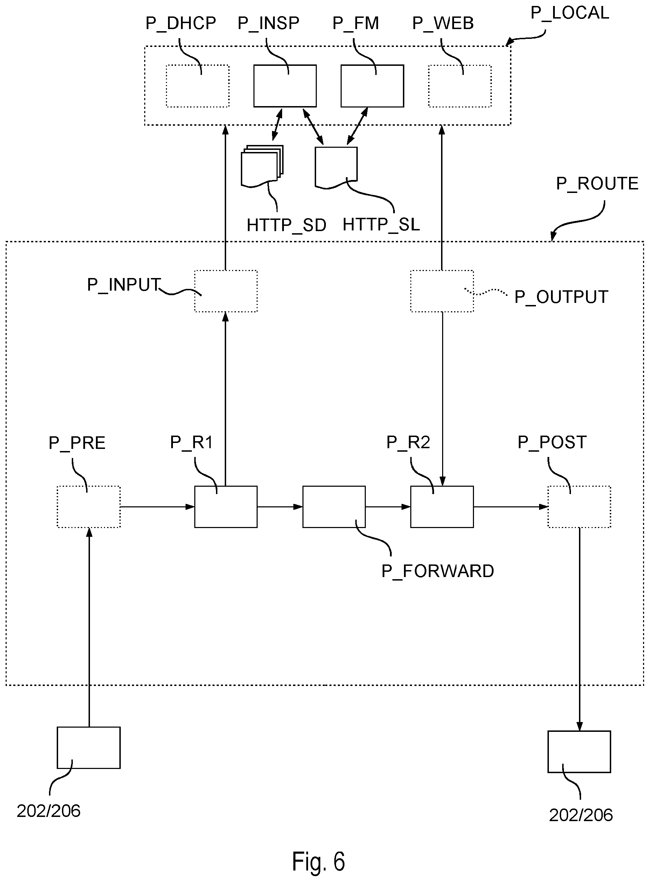

For example, Figure 6 shows an embodiment of the module P_ROUTE.

In particular, in the embodiment considered, the module P_ROUTE is configured for receiving at input the IP packets received through the interfaces 202/206, i.e., packets coming from the hosts 10 or the network 30.

In the embodiment considered, these packets are supplied to a module P_PRE that carries out a pre-routing operation, which typically checks whether the IP destination address and/or the destination port of the IP packet should be replaced. For example, the module P_PRE can have associated a module that carries out a port-mapping operation and/or the part of the NAT operation that is required for associating the packets received to the private IP addresses of the hosts 10. For example, typically the NAT operation is based upon a TCP/UDP session table, i.e., a table that monitors all the TCP/UDP connections between the hosts 10 and the hosts connected to the network 30. The use of this TCP/UDP session table is well known in the sector, which renders any detailed description here superfluous. The person skilled in the art will appreciate that this module P_PRE is purely optional and may even not be envisaged, for example in the case where the router 20a does not support the NAT function.

The pre-processed packet is supplied to a first routing module P_R1, which decides whether the packet is addressed to an internal process of the router 20a or should be forwarded to another host. For example, the module P_R1 can check whether the IP destination address of the IP packet corresponds to the address of one of the communication interfaces 202/206 of the router 20a.

For example, in the case where the packet is addressed to an internal process P_LOCAL, such as the modules P_DHCP or P_DNS described previously or a web-server P_WEB, the packet can be pre-processed by an input module P_INPUT, which for example retrieves the data D transmitted within the IP packet.

Instead, in the case where the packet is addressed to another host, the packet is supplied to a module P_FORWARD that analyses the packets and decide whether they should be accepted for forwarding or rejected.

For example, in various embodiments, the module P_FORWARD may comprise a sub-module that implements a firewall that decides according to the filtering rules FR whether a packet should be forwarded. In various embodiments, this sub-module can work at least at the network layer, i.e., at the layer of the IP protocol that comprises the source IP and the destination IP, and preferably also at the transport layer, for example at the TCP/UDP layer, which further comprises the source port and the destination port. In general, the firewall module could also work at a higher level.

Once it has been determined that the IP packet can be forwarded, the module PFORWARD supplies the data to a second routing module P_R2. In particular, this module P_R2 is configured for forwarding the data that come from the module P_FORWARD or from a local process P_LOCAL to the interfaces 202/206 of the router. In fact, also the local processes P_LOCAL can generate data, for example responses to the DHCP or web requests, which must be forwarded to the hosts 10 or the network 30, i.e., to the interfaces 202/206.

For instance, also in this case the data coming from an internal process P_LOCAL can be pre-processed by an output module P_OUPUT, which for example forms IP packets, before these are sent to the routing module P_R2.

In the embodiment considered, the packets at output from the module P_R2 are supplied to a module P_POST, which carries out a post-routing operation, which typically checks whether the IP source address and/or the source port of the IP packet should be replaced. For example, the module P_POST can have associated thereto a module that carries out the part of the NAT operation that is required for replacing the private IP addresses of the hosts 10 with the IP of the interface 206 and for creating the TCP/UDP session table described previously. Also this module P_POST is purely optional and may even not be envisaged, for example in the case where the router 20a does not support the NAT function.

Consequently, in the embodiment considered, the router 20a comprises a first communication interface 202 for connection to a first network, typically the LAN, and a second communication interface 206 for connection to a second network 30, typically the WAN. In the case of a router, the communication interfaces 202 and 206 are normally of a different type, for example a WiFi/Ethernet interface and a DSL interface, respectively. Instead, in the case where the device 20a is used as firewall, the communication interfaces 202 and 206 are typically two Ethernet network cards. In this case, the two Ethernet network cards may also be virtual or the physical network cards themselves may have associated two IP addresses.

In general, the logic communication interfaces 202 and 206 may even be the same (physical or virtual) communication interface. In fact, the module P_ROUTE is able to forward packets received from a first communication interface to a second communication interface, which may also be the same communication interface, for instance from the interface 202 to the interface 202 (see, for example, Figure 6). For instance, the device 20a could comprise even just a single physical or virtual communication interface with a single IP address, and an external router or firewall could be configured for forwarding all the packets (that satisfy certain criteria) to the device. For example, this configuration could be useful for providing the packet-inspection device as add-on for a router. In this case, the packet-inspection device 20a could send a given command to the router, and the router could change the internal routing table in such a way that given packets, for example all the TCP/IP packets, are sent to the packet-inspection device 20a. Next, the packet-inspection device 20a analyses the packets and sends the data packets again to the router, which, for example, can forward the data packets to the hosts 10 or the network 30.

Moreover, in the case of a home router, each communication interface 202 and 206 has associated a respective IP. However, this is not necessarily required, for example in the case where the device 20a is used as firewall or *transparent* packet-inspection device, i.e., as a device interposed in a network connection that analyses the data packets that are exchanged through this connection.

In all these cases, the device 20a comprises, at any event, a first communication interface 202, which can be connected to a first network, and a second communication interface 206 (that could physically correspond also to the interface 202), which can be connected to a second network.

The routing module P_ROUTE described may be implemented, for example, with the program Netfilter, which is frequently used inside the kernel of the LINUX® operating system. Basically, Netfilter enables specification of so-called hooks, which correspond to certain instants in the passage of a packet through the routing module P_ROUTE. For example, typical hooks are:
- NF_INET_PRE_ROUTING, which corresponds to the instant when packet is received in the pre-routing module P_PRE;
- NF_INET_LOCAL_IN, which corresponds to the instant when a packet is received in the module P_INPUT;
- NF_INET_IP_FORWARD, which corresponds to the instant when a packet is received in the module P_FORWARD;
- NF_INET_LOCAL_OUT, which corresponds to the instant when packet is received in the module P_OUTPUT; and
- NF_INET_POST _ROUTING, which corresponds to the instant when packet is received in the post-routing module P_POST.

Basically, these hooks can be used for recording, through so-called callbacks, other functions that are to be executed at certain moments. For example, in the case of Netfilter, the callbacks supply a pointer to a data structure that comprises the data of the packet, and consequently the function called can read or modify the contents of the packet or even decide whether a packet should be rejected or else temporarily stored in the memory. For example, in the case of Netfilter, each callback can return a result that indicates whether the packet can proceed (*NF_ACCEPT*) or whether the packet must be rejected (*NF_DROP*). Moreover, a third response option is the parameter *NF_STOLEN,* which can be used to indicate that the decision on routing of the packet cannot yet be taken. In this case, the packet can be transferred onto a pipeline to be reprocessed subsequently.

In the embodiment considered, the module P_ROUTE is configured for forwarding the packets that come from a host 10 and are to reach the network 30, or that come from the network 30 and are to reach a host 10 at an inspection module P_INSP, for example by appropriately configuring the modules P_PRE and/or P_R1.

In particular, in the embodiment shown in Figure 6, the inspection module is a local process P_LOCAL.

This embodiment presents the disadvantage that typically the routing module P_ROUTE is executed directly within the operating system, and consequently the packets can be processed faster in the module P_ROUTE as compared to an application PLOCAL.

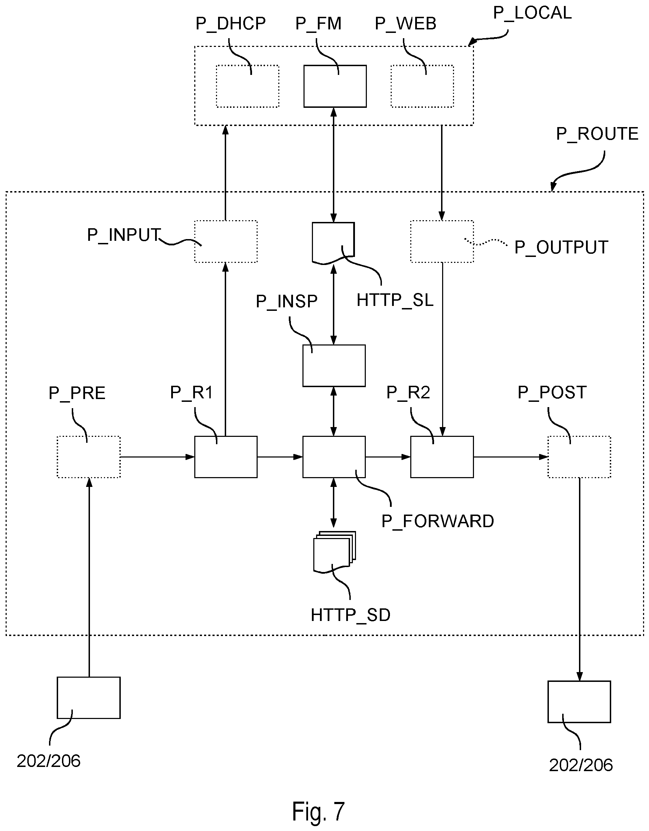

For this reason, Figure 7 shows an alternative embodiment, in which the inspection module P_INSP is integrated within the module P_ROUTE. For example, with the architecture described previously, the module P_FORWARD already receives all the packets that come from a host 10 and are to reach the network 30, or that come from the network 30 and are to reach a host 10, i.e., all the packets that are to be exchanged between the interfaces 202/206. Consequently, in the embodiment considered, the module P_INSP is associated to the module P_FORWARD. For example, in the case of Netfilter, the module P_INSP can be called via the hook *NF_INET_IP_FORWARD,* which corresponds to the instant when a packet is received in the module P_FORWARD.

In the embodiments considered, the module P_INSP is hence responsible for inspection of the packets for:
- detecting new HTTP requests, in particular at least those that are received by means of the interface 202 (i.e., the HTTP requests of the hosts 10);
- extracting the URL from the HTTP requests;
- detecting the HTTP responses, in particular at least those that are received by means of the interface 206 (i.e., the responses coming from the network 30); and
- blocking the HTTP responses in the case where the URL is blocked.

In particular, to associate the HTTP responses to the corresponding HTTP requests, the module P_INSP can manage an HTTP session table HTTP_SL, i.e., a table or list that contains the active HTTP requests. For example, at the moment when a new HTTP request is detected, the module P_INSP can write in the list HTTP_SL a new session that can be identified, for example, via the IP source address and the source port and the IP destination address and the destination port, i.e., the data that are normally used also in a TCP/UDP session table. However, the module P_INSP adds as further field also the URL detected in the HTTP request.

Instead, as described with reference to Figures 4 and 5a-5c, the module P_FM is responsible for communication with the policy server 60 in such a way as to detect whether the requested URL should be blocked.

For instance, in various embodiments, the module P_FM may use also for this purpose the list HTTP_SL, which already contains the URLs requested. For example, in various embodiments, the list HTTP_SL may comprise a further field to indicate whether:
a) the URL has not yet been processed (e.g., *"UNKNOWN"*);
b) the URL is blocked (e.g., *"DROP*"); and
c) the URL is allowed, i.e., is not blocked (e.g., *"ACCEPT"*).

In general, the module P_INSP can inform the module P_FM whenever a new session is added to the list HTTP_SL, or the module P_FM can monitor the list HTTP_SL periodically.

Next, the module P_FM can send a corresponding verification request REQ_URL to the policy server 60 and receive the corresponding verification response RESP_URL. In general, communication with the policy server 60 can be carried out with any communication interface, for example the interface 206 or a further communication interface. For instance, in the embodiment considered, the module P_FM can send the verification request REQ URL through the module P_ROUTE (in particular, the module P_R2) to the interface 206 and receive the verification responses RESP_URL through the module P_ROUTE (in particular, the module P_R1) from the interface 206.

In various embodiments, the module P_FM may also be configured for processing simultaneously a number of requests REQ URL. For example, the module P_FM could manage the communication for requesting simultaneously a number of verifications, without the need to wait for reception of the corresponding verification response RESP_URL.

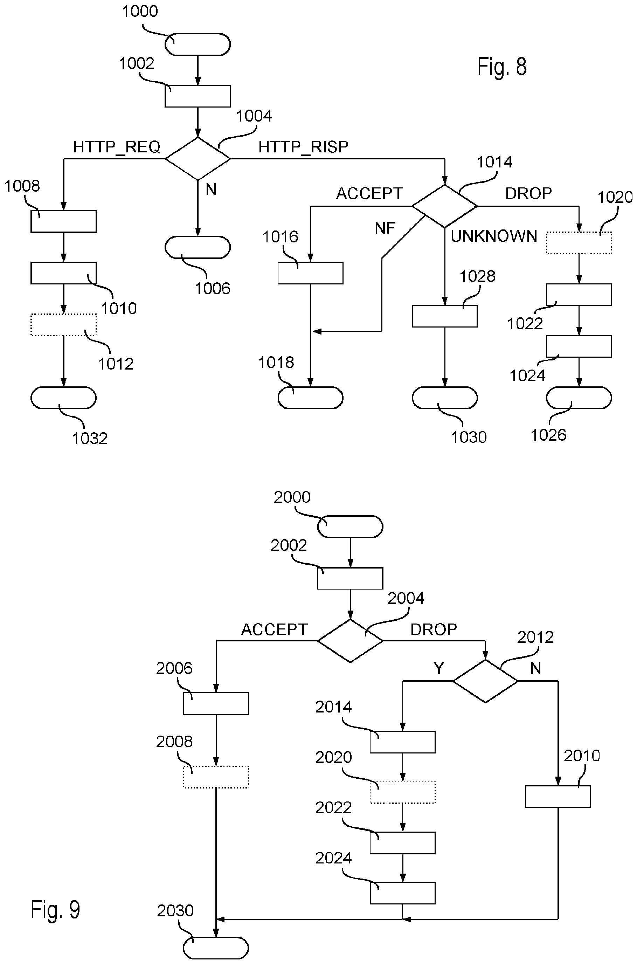

Figure 8 shows the flowchart of a possible embodiment of the module P_INSP.

In particular, as explained previously, in the embodiment considered, the module P_INSP analyses all the packets for detecting the HTTP requests, for extracting the corresponding URLs, and possibly for blocking the corresponding HTTP response.

Consequently, in the embodiment considered, the HTTP requests are not blocked, but the module P_FM checks in parallel whether the URL should be blocked.

In particular, in the embodiment considered, the module P_INSP is activated in a step 1000 when a new packet is received. For example, as explained previously, the module P_INSP can be activated with the hook *NF_INET_FORWARD* of the module Netfilter, which notifies passage of a packet (coming from the interface 202 or 206) that is not directed to a local process P_LOCAL.

In a step 1002, the module P_INSP analyses the packet to detect HTTP requests or responses. Preferably, the module P_INSP analyses all the (TCP) packets and not only the ones that are addressed to the port 80 typically used for the HTTP protocol.

In particular, in various embodiments, the module analyses the payload D of the TCP packet so as to determine whether the packet contains as payload an HTTP request or response.

In various embodiments, the module P_INST can also take into account the sequence number of the TCP packet, for example to analyse only the packets that correspond to the first packet of a respective transmission.

In general, the module P_INSP can store inside it even a plurality of packets, for instance in the case where the packet contains only a part of an HTTP request or response, for example in the case where a first packet comprises the command *"GET"* and only a subsequent packet comprises the field *"host".*

Consequently, in various embodiments, the module P_INSP classifies a packet (or a sequence of packets with the same TCP session information) as HTTP request, if the respective payload D comprises a command of the HTTP method, i.e., *"GET", "POST", "PUT",* etc. Typically, the HTTP method represents the first data of a request, and consequently the module P_INSP may even just analyse the first characters of the payload D.

Instead, in general, the HTML response could be detected using the TCP/UDP session table of the routing module P_ROUTE or preferably the list HTTP_SL that comprises the active HTTP sessions. For example, in this case, the source address and port can be compared with the destination addresses and ports stored in the HTTP list, and likewise the destination address and port can be compared with the source addresses and ports.

Instead, in various embodiments, the module P_INSP also in this case analyses the packets, in particular to determine whether the packet comprises the status line of an HTML response. In particular an HTTP response typically comprises as first characters the HTML version used, for example *"HTTP*/*1.0"* or *"HTTP*/*1.1".* Consequently, also in this case, a simple comparison of the first characters with a possible reference string (for example *"HTTP*") is sufficient to detect an HTTP response.

In various embodiments, the module P_INSP can also take into account the status code of the HTTP response, which typically follows the HTML version, for instance *"HTTP*/*1.1 200 OK".* For example, in various embodiments, the module P_INSP classifies the packet as HTTP response only if the packet comprises the status code 200 that indicates sending of an HTTP content. In various embodiments, the module P_INSP classifies the packet also as HTTP response if the packet comprises the status code of the 30x series (e.g. 300, 301, etc.), which indicates addressing to another URL.

Consequently, in the embodiment considered, other response packets, for example packets that comprise the data of the HTML Body or further packets of a streaming, are not detected as HTML response and can be forwarded.

Consequently, in a verification step 1004, the module P_INSP can analyse the result of step 1002.

For example, in the case where the packet has not been detected as HTTP request or response (output N from the verification step 1004), the packet can pass. For instance, in the embodiment considered, this can be obtained by supplying in an end step 1006 the result *"NF_ACCEPT"* to the module P_FORWARD.

Instead, in the case where the packet comprises an HTTP request (output HTTP REQ from the verification step 1004), the module P_INSP can proceed to a step 1008, where it analyses the packet to extract the URL.

In a next step 1010, the module P_INSP can update the table HTTP_SL by adding a new session comprising, for example, the IP source address and the source port, the IP destination address and the destination port and the URL, identifying the status of the respective HTTP session as yet not verified (e.g., status *"UNKNOWN*").

In an optional step 1012, the module P_INSP can then inform the module P_FM in such a way that the module P_FM proceeds with the operation of verification of the URL. For example, the module P_INSP can send for this purpose a message to the module P_FM, which comprises, for example, the URL detected.

As explained previously, in various embodiments, the HTTP requests are not blocked. Consequently, in the embodiment considered, the module P_INSP supplies in an end step 1032 the result *"NF_ACCEPT"* to the module P_FORWARD.

Instead, in the case where the packet comprises an HTTP response (output HTTP_RESP from the verification step 1004), the module P_INSP can verify in a step 1014 the status of the respective HTTP session. As explained previously, the module P_INSP can detect the respective session via the list HTTP_SL.

In various embodiments, in the case where the status of the session indicates that the URL is not blocked (output *"ACCEPT"* from the verification step 1014), the module P_INSP can let the packet through. For instance, in the embodiment considered, the module P_INST supplies for this purpose, in an end step 1018, the result *"NF_ACCEPT"* to the module P_FORWARD. In various embodiments, before proceeding to step 1018, the module P_INSP can erase, in a step 1016, the respective session from the list HTTP_SL.

In various embodiments, the module P_INST proceeds to step 1016 even in the case where the HTTP session has not been found in the list HTTP_SL (output "NF" from the verification step 1014).

Instead, in the case where the status of the session indicates that the URL is blocked (output *"DROP"* from the verification step 1014), the module P_INSP should block the packet. For example, in the embodiment considered, the module P_INSP proceeds to an optional step 1020, where it can send to the remote server 40 a message that terminates the TCP session.

In a next step 1022, the module P_INSP can implement an operation for blocking the HTTP response. For example, as mentioned previously, the module P_INSP or P_FM could generate a new HTTP response packet, which comprises a re-addressing (HTTP status code of the 30x series) to an error and/or login web page, for example managed by the module P_WEB, or an error (HTTP status code of the 40x series).

Also in this case, the module P_INSP can erase, in a step 1024, the respective session from the list HTTP_SL.

Consequently, in the embodiment considered, the packet received can be rejected. For example, in the embodiment considered, the module P_INST supplies for this purpose, in an end step 1026, the result *"NF_DROP"* to the module P_FORWARD.

Alternatively, the module P_INSP could also modify the contents of the packet, for example to replace the HTTP response with a re-addressing. In this case, the modified packet is hence not rejected, but forwarded; i.e., the module P_INST could supply in this case the result *"NF_ACCEPT"* to the module P_FORWARD.

Instead, in the case where the state is still unknown (output *"UNKNOWN"* from the verification step 1014) the module P_INSP does not yet know whether the packet should be rejected. For this reason, in various embodiments, the module P_INSP stores, in a step 1028, the packet in a buffer HTTP_SD that contains the data of the HTTP sessions that cannot yet be forwarded or rejected, for example storing again the data of the session and the respective data of the packets. For instance, in various embodiments, this list can be then processed again basically following the steps 1014-1030.

Consequently, in the embodiment considered, the procedure terminates in this case in an end step 1030 without taking a final decision on the destiny of the packet. For example, in the embodiment considered, the module P_INST supplies for this purpose, in an end step 1016, the result *"NF_STOLEN"* to the module P_FORWARD.

Instead, Figure 9 shows the flowchart of a possible embodiment of the module P_FM.

In the embodiment considered, the module P_INSP is activated in a step 2000, for example periodically or when a notification is received from the module P_INSP (see step 1012 of Figure 8).

In a step 2002, the module P_FM communicates with the policy server 60 to decide whether the URL should be blocked or not (see Figure 5a-5c).

In a step 2004, the module P_FM can then check the decision.

In particular, in the case where the URL is not blocked (output *"ACCEPT"* from the verification step 2004), the module P_FM can proceed to a step 2006. In step 2006, the module P_FM can set the status of the respective session HTTP in the list HTTP_SL in such a way as to signal that the URL is not blocked (*"ACCEPT"*)*;* namely, the module P_INSP will follow the output *"ACCEPT"* from the verification step 1014.

In various embodiments, the module P_FM may even simply erase, in step 2006, the respective HTTP session from the list HTTP_SL; namely, the module P_INSP will follow the output "*NF*" from the verification step 1014. In this case, the branch *"ACCEPT"* and the step 1016 shown in Figure 8 may even not be envisaged.

In an optional step 2008, the module P_FM can start sending possible data that are stored for the respective HTTP session. For example, as explained previously, possible HTTP data may already have been stored previously in the buffer HTTP_SD. In general, these data associated to the HTTP session can be sent via the module P_INSP or the module P_FM.

Instead, in the case where the URL is blocked (output *"DROP"* from the verification step 2004), the module P_FM can identify, in a step 2010, the status of the respective HTTP session as blocked ("*DROP*"); i.e., the module P_INSP will follow the output *"DROP"* from the verification step 1014.

Preferably, before blocking the URL in step 2010, the module P_FM verifies in a step 2012 whether the buffer HTTP_SD comprises data for the HTTP session.

In this case, the module P_FM proceeds to step 2010 only if the buffer HTTP_SD does not comprise data for the HTTP session (output "N" from the verification step 2012).

Instead, in the case where the buffer HTTP_SD comprises data for the HTTP session (output "Y" from the verification step 2012), the module P_FM proceeds to a step 2014 to erase the respective data.

In this case, the module P_FM preferably terminates also the HTTP session. For example, in the embodiment considered, the module P_FM can send, in an optional step 2020, to the remote server 40 a message that terminates the TCP session. Moreover, the module P_FM can generate, in a step 2022, a new HTTP response packet, which comprises a re-addressing (HTTP status code of the 30x series) or an error (HTTP status code of the 40x series). Finally, the module P_FM can erase, in a step 2024, the respective session from the list HTTP_SL. Consequently, in this embodiment, the session is terminated, and all the data saved for the session are erased.

Likewise, instead of carrying out the steps 1022, 1024, and 1026 in the module P_INSP (see Figure 8), i.e., the steps that terminate the HTTP session, the corresponding steps can be carried out also in the module P_FM; i.e., the steps 2020, 2022, and 2024 can be carried out also after the step 2010. Consequently, in this embodiment, the HTTP session will be terminated, and the HTTP response from the server 40 should not arrive; i.e., the module P_INSP should never reach the output *"DROP"* from the verification step 1014. However, in the embodiment considered, this choice is not preferable. In fact, in the embodiment considered, the modules P_FM and P_INSP work in parallel. Consequently, there cannot be ruled out the possibility, while the module P_FM decides to close a session, of a packet reaching the module P_INSP that should be carefully managed to prevent sending multiple responses to the host.

In various embodiments, the module P_INSP can be configured for analysing also other types of application protocols based upon requests and responses, for example the protocols FTP, POP (Post Office Protocol), IMAP (Internet Message Access Protocol), SMB (Server Message Block), or WebDAV (Web-based Distributed Authoring and Versioning).

In fact, the present solution can be applied to all application protocols that comprise a request for access to a given resource of a given remote server 40. Consequently, the resource may, for example, be the IP address and/or port of the remote server 40, an SSL certificate of the remote server 40, a specific email, or a given file. In this case, the module P INSP is configured for analysing the packets at the application-protocol layer to detect access requests and determine the respective requested resources. Consequently, the module P_FM can determine, for example through exchange of one or more messages with a policy server 60, whether access to the resource requested is allowed or blocked.

In various embodiments, the modules P_INSP and P_FM do not block the requests; i.e., the router 20a forwards the requests to the network 30, but the modules P_INSP and P_FM block one or more packets received in response to the aforesaid request. For this purpose, the modules P_INSP and P_FM can manage a session table that enables association of the responses received to respective requests.

Consequently, in general, the device 20a can receive through a first communication interface, for example the communication interface 202, one or more data packets that may comprise an access request of a first host 10 connected to a first network to a resource managed by a second host 40 connected to a second network. The device 20a then analyses the data packet or packets received through the first communication interface for detecting the access request. The device 20a analyses the access request for detecting the respective resource requested and sends the access request to a second communication interface connected to the second network, such as the communication interface 206. In the mean time or subsequently, the device 20a can determine whether the resource requested is blocked or allowed and identify the status of the response to this access request as blocked or allowed.

The device 20a then receives, through the second communication interface, one or more data packets that may comprise a response of the second host 40 to the access request of the first host 10. The device 20a analyses these data packets received to detect the response and verifies the status of the response to determine whether the response is blocked or allowed. For example, in the case where the response is blocked, the device 20a can inhibit forwarding of at least one part of the response to the first communication interface. Instead, in the case where the response is allowed, the device 20a can forward the response to the first communication interface.

In various embodiments, the packet-inspection function is transparent for the hosts 10 and 40. Consequently, in this embodiment, the device 20a forwards directly the data packet or packets that comprise the request for access to the second communication interface (neglecting the routing functions at the transport layer, for example, for implementing the NAT function). Likewise, the device can forward directly the data packets that comprise the response to the first communication interface.

However, in general, the device 20a could be configured for receiving from the host 10 a predetermined request that can use a first protocol and generates a corresponding request to be sent to the host 40 using a second protocol. For example, in this case, the device 20a may be a proxy or gateway, such as an HTTP proxy, which can be transparent or else configured client-end, i.e., on the host 10. In this case, the device 20a then receives from the host 40 a response in accordance with the second protocol, which is converted for forwarding to the host 10.

For example, the embodiment shown in Figure 7 can be used for transparent inspection of the packets, whereas the embodiment shown in Figure 6 can be used for implementing the module P_INSP as additional module for a proxy server.

The solutions described previously can also be used for inspection of packets transmitted through secure, i.e., encrypted, channels for example in accordance with the HTTPS (HyperText Transfer Protocol over Secure Socket Layer/Transport Layer Security) protocol.

For example, in the case where the module P_INSP is used in the proxy configuration, the encrypted communication channel is created between the device 20a and the remote host 40, and the communication with the host 10 is independent. Consequently, in this case, the device 20a can analyse the contents of the requests/responses as in the previous solutions.

However, also in the solution with transparent inspection, the device 20a could be configured for "breaking" the secure communication between the host 10 and the host 40 into two communications: one communication between the host 10 and the device 20a, and one communication between the device 20a and the host 40. This type of operation is commonly called "man-in-the-middle". The person skilled in the art will appreciate that this solution is no longer able to supply the original certificate of the host 40 to the host 10; i.e., the information on the certificate of origin is lost. However, the device 20a could in any case check the reliability of the certificate of the host 40 and possibly display an error (web) page that makes it possible to accept or refuse the certificate of the host 40.

Of course, without prejudice to the underlying principles of the invention, the details of implementation and the embodiments may vary widely with respect to what has been described and illustrated herein purely to way of example, without thereby departing from the scope of the present invention, as defined in the ensuing claims.

## Claims

1. Method for data packets inspection via a device (20a) comprising a first communication interface (202) adapted to be connected to a first network and a second communication interface (206) adapted to be connected to a second network (30), the method comprising:
- receiving through said first communication interface (202) one or more data packets which may comprise an access request of a first host (10) connected to said first network to a resource managed by a second host (40) connected to said second network (30);
- analyzing (1002) said one or more data packets received through said first communication interface (202) for detecting said access request, and in case said access request is detected (1004):
a) analyzing (1008) said access request for determining the respective requested resource,
b) determining (2000-2030) whether said requested resource is blocked or permitted, wherein said determining (2000-2030) whether said requested resource is blocked or permitted comprises at least one of:
- verifying whether said requested resource is stored in one or more lists stored within said device (20a), and
- sending a verification request (REQ_URL) to a policy server (60) and receiving a respective verification response (RSP_URL) from said policy server (60), and
c) in case said requested resource is blocked, identifying the status of the response to said access request as blocked (2010), and
d) in case said requested resource is permitted, identifying the status of the response to said access request as permitted (2006);
- sending (1032), in parallel to said analysing, said access request to said second communication interface (206);
- receiving through said second communication interface (206) one or more data packets which may comprise a response of said second host (40) to said access request of said first host (10);
- analyzing (1002) said one or more data packets received through said second communication interface (206) for detecting said response, and in case said response is detected (1004):
a) verifying (1014) the status of the response for determining whether said response is blocked or permitted,
b) in case said response is blocked (DROP), inhibiting (1020-1026; 2014-2024) the forwarding of at least a part of said response to said first communication interface (202), and
c) in case said response is permitted (ACCEPT), forwarding said response to said first communication interface (202).

2. Method according to Claim 1, wherein said identifying (2010) the status of the response to said access request as blocked or permitted comprises managing a session table (HTTP_SL) comprising the responses blocked and/or the responses permitted, wherein with each blocked response and/or permitted response are associated information which permit to identify at least a respective first (10) and second (40) host, and wherein said session table (HTTP_SL) is used for verifying (1014) the status of the response.

3. Method according to any of the previous claims, wherein said determining (2000-2030) whether said requested resource is blocked or permitted comprises at least one of:
- detecting an identification of said first host (10) and determining whether said requested resource is blocked as a function of said identification of said first host (10);
- detecting an identification of an user which uses said first host (10) and determining whether said requested resource is blocked as a function of the identification of said user,
- detecting the date and/or time and determining whether said requested resource is blocked as a function of the detected date and/or time,
- monitoring the number of access requests to a given resource.

4. Method according to any of the previous claims, wherein said access requests are access requests according to the "Hypertext Transfer Protocol", "File Transfer Protocol", "Post Office Protocol", "Internet Message Access Protocol", "Server Message Block", "Web-based Distributed Authoring and Versioning" or "HyperText Transfer Protocol over Secure Socket Layer / Transport Layer Security" protocol.

5. Method according to Claim 4, wherein said detecting an access request comprises:
- determining for each data packet whether the data packet starts with a method of the Hypertext Transfer Protocol, such as *"GET", "POST",* or "*PUT*".

6. Method according to Claim 4 or Claim 5, wherein said detecting a response comprises:
- determining for each data packet whether the data packet starts with a status line of the Hypertext Transfer Protocol, such as *"HTTP", "HTTP*/*1.0"* or *"HTTP*/*1.1".*

7. Method according to any of the previous claims, comprising:
- in case an access request (1004) is detected, identifying (1010) the status of the response to said access request as unknown; and
- when a response is detected and in case the status of said response is unknown (UNKNOWN), storing at least part of said response in a memory (HTTP_SD).

8. Device for data packet inspection, said device (20a) comprising at least one communication interface (202, 206) and a processing unit (204) configure to implement the method according to any of the previous claims.

9. A computer-program product that can be loaded into the memory of at least one processor and comprises portions of software code for implementing the method according to any of Claims 1 to 7.

## Patentansprüche

1. Verfahren zur Prüfung von Datenpaketen über eine Vorrichtung (20a) mit einer ersten Kommunikationsschnittstelle (202), die an ein erstes Netzwerk anschließbar ist, und einer zweiten Kommunikationsschnittstelle (206), die an ein zweites Netzwerk (30) anschließbar ist, wobei das Verfahren umfasst:
- Empfangen eines oder mehrerer Datenpakete über die erste Kommunikationsschnittstelle (202), die eine Zugriffsanfrage eines ersten Hosts (10) umfassen können, der mit dem ersten Netzwerk an eine von einem zweiten Host (40) verwaltete Ressource verbunden ist, der mit dem zweiten Netzwerk (30) verbunden ist;
- Analysieren (1002) des einen oder der mehreren Datenpakete, die über die erste Kommunikationsschnittstelle (202) empfangen werden, um die Zugriffsanfrage zu erfassen, und falls die Zugriffsanfrage erkannt wird (1004):
a) Analysieren (1008) der Zugriffsanfrage zur Bestimmung des die jeweils angeforderte Ressource,
b) Bestimmen (2000-2030), ob die angeforderte Ressource blockiert oder erlaubt ist, wobei das Bestimmen (2000-2030), ob die angeforderte Ressource blockiert oder erlaubt ist, mindestens eines aus folgendem umfasst:
- Prüfen, ob die angeforderte Ressource in einer oder mehr Listen gespeichert ist, die in der Vorrichtung (20a) gespeichert sind, und
- Senden einer Verifikationsanfrage (REQ_URL) an einen Richtlinienserver (60) und Empfangen einer entsprechenden Verifikationsantwort (RSP_URL) von dem Richtlinienserver (60), und
c) falls die angeforderte Ressource blockiert ist, Identifizieren des Status der Antwort auf diese Zugriffsanfrage als gesperrt (2010), und
d) falls die angeforderte Ressource erlaubt ist, den Status der Antwort auf die Zugriffsanfrage als erlaubt zu identifizieren (2006);
- Senden (1032), parallel zu dem Analysieren, der Zugriffsanfrage an die zweite Kommunikationsschnittstelle (206);
- Empfangen eines oder mehrerer mehr Datenpakete über die zweite Kommunikationsschnittstelle (206), die eine Antwort des zweiten Hosts (40) auf die Zugriffsanfrage des ersten Hosts (10) umfassen können;
- Analysieren (1002) des einen oder der mehreren Datenpakete, die über die zweite Kommunikationsschnittstelle (206) empfangen werden, um die Antwort zu erfassen, und falls die Antwort erfasst wird (1004):
a) Überprüfen (1014) des Status der Antwort zum Bestimmen ob diese Antwort blockiert oder erlaubt ist,
b) falls die Antwort blockiert ist (DROP), Sperren (1020-1026; 2014-2024) der Weiterleitung von mindestens einem Teil der Antwort an die erste Kommunikationsschnittstelle (202), und
c) falls die Antwort erlaubt ist (ACCEPT), Weiterleiter der Antwort an die erste Kommunikationsschnittstelle (202).

2. Verfahren nach Anspruch 1, wobei das Identifizieren (2010) des Status der Antwort auf die Zugriffsanfrage als blockiert oder erlaubt das Verwalten von
einer Sitzungstabelle (HTTP_SL) umfasst, welche die blockierten Antworten und/oder die erlaubten Antworten umfasst, wobei mit jeder blockierten Antwort und/oder erlaubten Antworte Informationen zugeordnet sind, die es erlauben, mindestens einen jeweiligen ersten (10) und zweiten (40) Host zu identifizieren, und wobei die Sitzungstabelle (HTTP_SL) zum Überprüfen (1014) des Status der Antwort verwendet wird.

3. Verfahren nach einem der vorhergehenden Ansprüche, wobei die Bestimmung (2000-2030), ob die angeforderte Ressource blockiert oder erlaubt ist, mindestens eines von folgenden umfasst:
- Detektieren einer Identifizierung des ersten Hosts (10) und Bestimmen, als eine Funktion von der Identifizierung des ersten Hosts (10), ob die angeforderte Ressource blockiert ist;
- Erfassen einer Identifizierung eines Benutzers, der den ersten Host (10) verwendet, und Bestimmen, als eine Funktion des Identifikation des Benutzers, ob die angeforderte Ressource blockiert ist,
- Erfassen des Datums und/oder der Uhrzeit und Bestimmen, als eine Funktion von dem erfasstem Datum und/oder der erfassten Uhrzeit, ob die angeforderte Ressource blockiert ist,
- Überwachung der Anzahl der Zugriffsanfragen auf eine bestimmte Ressource.

4. Verfahren nach einem der vorhergehenden Ansprüche, wobei diese Zugriffsanfragen Zugriffsanfragen gemäß des "Hypertext Transfer Protocol", "File Transfer Protocol", "Post Office Protocol", "Internet Message Access Protocol", "Server Message Block", "Web-based Distributed Authoring and Versioning" oder "HyperText Transfer Protocol over Secure Socket Layer / Transport Layer Security" Protokolls sind.

5. Verfahren nach Anspruch 4, wobei das Erfassen einer Zugriffsanfrage umfasst:
- für jedes Datenpaket zu bestimmen, ob das Datenpaket mit einer Methode des Hypertext Transfer Protokolls, wie z.B. "GET", "POST" oder "PUT" beginnt.

6. Verfahren nach Anspruch 4 oder Anspruch 5, wobei das Erfassen einer Antwort umfasst:
- für jedes Datenpaket zu bestimmen, ob das Datenpaket mit einer Statuszeile des Hypertext Transfer Protokolls beginnt, wie z.B. "HTTP", "HTTP/1.0" oder "HTTP/1.1".

7. Verfahren nach einem der vorhergehenden Ansprüche, umfassend:
- falls eine Zugriffsanfrage (1004) erkannt wird, Identifizieren (1010) des Status der Antwort auf die Zugriffsanfrage als unbekannt; und
- wenn eine Antwort erkannt wird und falls der Status der Antwort unbekannt ist (UNKNOWN), Speichern mindestens eines Teils der Antwort in einem Speicher (HTTP_SD).

8. Vorrichtung zur Kontrolle von Datenpaketen, wobei die Vorrichtung (20a) mindestens eine Kommunikationsschnittstelle (202, 206) und eine Verarbeitungseinheit (204), die konfiguriert ist, um das Verfahren gemäß einem der vorherigen Ansprüche zu implementieren, umfasst.

9. Computerprogrammprodukt, das in den Speicher mindestens eines Prozessors geladen werden kann und Teile von Softwarecode zur Durchführung des Verfahrens nach einem der Ansprüche 1 bis 7 umfasst.

## Revendications

1. Procédé pour l'inspection de paquets de données par l'intermédiaire d'un dispositif (20a) comprenant une première interface de communication (202) conçue pour être connectée à un premier réseau et une deuxième interface de communication (206) conçue pour être connectée à un deuxième réseau (30), le procédé comprenant :
- la réception, par l'intermédiaire de ladite première interface de communication (202), d'un ou de plusieurs paquets de données qui peuvent comprendre une demande d'accès d'un premier hôte (10) connecté audit premier réseau à une ressource gérée par un deuxième hôte (40) connecté audit deuxième réseau (30) ;
- l'analyse (1002) desdits un ou plusieurs paquets de données reçus par l'intermédiaire de ladite première interface de communication (202) pour détecter ladite demande d'accès, et dans le cas où ladite demande d'accès est détectée (1004) :
(a) analyser (1008) ladite demande d'accès pour déterminer la ressource demandée respective,
(b) déterminer (2000 à 2030) si ladite ressource demandée est bloquée ou autorisée, dans lequel ladite détermination (2000 à 2030) si ladite ressource demandée est bloquée ou autorisée comprend au moins l'un :
- de la vérification si ladite ressource demandée est mémorisée dans une ou plusieurs listes mémorisées dans ledit dispositif (20a), et
- de l'envoi d'une demande de vérification (REQ_URL) à un serveur de politique (60) et de la réception d'une réponse de vérification (PSP_UPL) respective dudit serveur de politique (60), et
(c) dans le cas où ladite ressource demandée est bloquée, l'identification de l'état de la réponse à ladite demande d'accès comme étant bloquée (2010), et
(d) dans le cas où ladite ressource demandée est autorisée, l'identification de l'état de la réponse à ladite demande d'accès comme étant autorisée (2006) ;
- l'envoi (1032), en parallèle avec ladite analyse, de ladite demande d'accès à ladite deuxième interface de communication (206) ;
- la réception, par l'intermédiaire de ladite deuxième interface de communication (206), d'un ou de plusieurs paquets de données qui peuvent comprendre une réponse dudit deuxième hôte (40) à ladite demande d'accès dudit premier hôte (10) ;
- l'analyse (1002) desdits un ou plusieurs paquets de données reçus par l'intermédiaire de ladite deuxième interface de communication (206) pour détecter ladite réponse, et dans le cas où ladite réponse est détectée (1004) :
(a) vérifier (1014) l'état de la réponse pour déterminer si ladite réponse est bloquée ou autorisée,
(b) dans le cas où ladite réponse est bloquée (DROP), interdire (1020 à 1026 ; 2014 à 2024) réacheminer au moins une partie de ladite réponse vers ladite première interface de communication (202), et
(c) dans le cas où ladite réponse est autorisée (ACCEPT), réacheminer ladite réponse vers ladite première interface de communication (202).

2. Procédé selon la revendication 1, dans lequel ladite identification (2010) de l'état de la réponse à ladite demande d'accès comme étant bloquée ou autorisée comprend la gestion d'une table de sessions (HTTP_SL) comprenant les réponses bloquées et/ou les réponses autorisées, dans lequel des informations qui permettent d'identifier au moins des premier (10) et deuxième (40) hôtes respectifs sont associées à chaque réponse bloquée et/ou réponse autorisée, et dans lequel ladite table de sessions (HTTP_SL) est utilisée pour vérifier (1014) l'état de la réponse.

3. Procédé selon l'une quelconque des revendications précédentes, dans lequel ladite détermination (2000 à 2030) si ladite ressource demandée est bloquée ou autorisée comprend au moins l'un :
- de la détection d'une identification dudit premier hôte (10) et de la détermination si ladite ressource demandée est bloquée en fonction de ladite identification dudit premier hôte (10) ;
- de la détection d'une identification d'un utilisateur qui utilise ledit premier hôte (10) et de la détermination si ladite ressource demandée est bloquée en fonction de l'identification dudit utilisateur,
- de la détection de la date et/ou de l'heure et de la détermination si ladite ressource demandée est bloquée en fonction de la date et/ou de l'heure détectées,
- de la surveillance du nombre de demandes d'accès à une ressource donnée.

4. Procédé selon l'une quelconque des revendications précédentes, dans lequel lesdites demandes d'accès sont des demandes d'accès selon les protocoles suivants : « Hypertext Transfer Protocol », « File Transfer Protocol », « Post Office Protocol », « Internet Message Access Protocol », « Server Message Block », « Web-based Distributed Authoring and Versioning » ou « Hypertext Transfer Protocol over Secure Socket Layer / Transport Layer Security ».

5. Procédé selon la revendication 4, dans lequel ladite détection d'une demande d'accès comprend :
- la détermination, pour chaque paquet de données, si le paquet de données débute avec une méthode du protocole Hypertext Transfer Protocol, telle que « *GET », « POST », ou « PUT ».*

6. Procédé selon la revendication 4 ou la revendication 5, dans lequel ladite détection d'une réponse comprend :
- la détermination, pour chaque paquet de données, si le paquet de données débute par une ligne d'état du protocole Hypertext Transfer Protocol, telle que « *HTTP », « HTTP*/*1.0 » ou « HTTP*/*1.1* ».

7. Procédé selon l'une quelconque des revendications précédentes, comprenant :
- dans le cas où une demande d'accès (1004) est détectée, l'identification (1010) de l'état de la réponse à ladite demande d'accès comme étant inconnue ; et
- lorsqu'une réponse est détectée et dans le cas où l'état de ladite réponse est inconnue (UNKNOWN), la mémorisation d'au moins une partie de ladite réponse dans une mémoire (HTTP_SD).

8. Dispositif pour l'inspection de paquets de données, ledit dispositif (20a) comprenant au moins une interface de communication (202, 206) et une unité de traitement (204) configurée pour mettre en oeuvre le procédé selon l'une quelconque des revendications précédentes.

9. Produit-programme d'ordinateur qui peut être chargé dans la mémoire d'au moins un processeur et qui comprend des parties d'un code de logiciel pour mettre en oeuvre le procédé selon l'une quelconque des revendications 1 à 7.
